# EUROPÄISCHE PATENTSCHRIFT

(11) **EP 2 285 672 B1**
(45) Veröffentlichungstag und Bekanntmachung des Hinweises auf die Patenterteilung: **23.11.2011**
(21) Anmeldenummer: 09753889.6
(22) Anmeldetag: 27.05.2009
(51) Int. Cl.: B64C 7/00, B64D 13/00

(54) **FRISCHLUFTEINLASS FÜR EIN FLUGZEUG**
FRESH AIR INLET FOR AN AIRCRAFT
ENTRÉE D'AIR FRAIS POUR UN AVION

(30) Priorität: 30.05.2008 DE 102008026117; 30.05.2008 US 130451
(43) Veröffentlichungstag der Anmeldung: 23.02.2011
(73) Patentinhaber: Airbus Operations GmbH, 21129 Hamburg (DE)
(72) Erfinder: EICHHOLZ, Johannes, 22085 Hamburg (DE); BEIER, Jens, 21279 Drestedt (DE); SOLNTSEV, Alexander, 21509 Glinde (DE); SCHMIDT, Rüdiger, 27449 Kutenholz (DE)
(74) Vertreter: Maiwald Patentanwalts GmbH
(86) Internationale Anmeldenummer: PCT/EP2009/056401
(87) Internationale Veröffentlichungsnummer: WO 2009/144234

(56) Entgegenhaltungen:
- EP-A- 1 916 185
- DE-A1-102007 052 817
- GB-A- 785 721
- GB-A- 2 176 570
- US-A- 3 568 694
- US-A1- 2004 144 097

## Beschreibung

### BEZUG AUF ZUGEHÖRIGE ANMELDUNGEN

Die vorliegende Anmeldung beansprucht die Priorität der US Provisional Patentanmeldung Nr. 61/130,451, eingereicht am 30. Mai 2008 und der deutschen Patentanmeldung Nr. 10 2008 026 117.3, eingereicht am 30. Mai 2008, deren Inhalte hierin durch Referenz inkorporiert werden.

### GEBIET DER ERFINDUNG

Die Erfindung betrifft einen Frischlufteinlass für ein Flugzeug.

### HINTERGRUND DER ERFINDUNG

Verkehrsflugzeuge benötigen eine Frischluftversorgung. Diese kann aus verschiedenen Quellen, wie etwa Triebwerksverdichter, Hilfstriebwerk ("APU") oder anderen Quellen bereitgestellt werden. So ist es üblich, Klimaanlagen in größeren Flugzeugen mit Zapfluft aus Flugzeugtriebwerken zu versorgen. Klimaaggregate von verbreiteten Flugzeugklimatisierungssystemen weisen einen oder mehrere großvolumige Wärmetauscher auf, die während des Flugs von Stauluft durchströmt werden. Die Stauluft wird für das Abkühlen der Zapfluft benutzt. Die Stauluft wird üblicherweise von Stauluftkanälen bereitgestellt. Bei relativ modernen Verkehrsflugzeugen sind Klimatisierungssysteme vorgesehen, die ohne oder mit relativ wenig Zapfluft betrieben werden können. Um hierfür die relativ großen erforderlichen Luftmengen bereitzustellen, die die Kabine mit einem Druck beaufschlagen, ventilieren und klimatisieren, liegt die Verwendung von relativ großen Frischlufteinlässen am Rumpf des Flugzeugs nahe. Derartige Frischlufteinlässe erstrecken sich üblicherweise von einer Außenkontur des Flugzeugrumpfs nach außen und weisen beispielsweise eine gekrümmte, schaufelartige Form auf, die auch als "ram air scoop" oder "ram air inlet scoop" bekannt sind.

Die Form dieser Art von Frischlufteinlässen wird für den Reiseflugzustand ausgelegt, der insbesondere bei Langstreckenverkehrsflugzeugen die mit Abstand längste Flugphase darstellt. In diesen Flugphasen wird eine relativ hohe Geschwindigkeit von beispielsweise 0,8 Ma oder mehr erreicht, so dass trotz der geringen Luftdichte in Reiseflughöhe ein ausgeprägter Staudruck an den Frischlufteinlässen entsteht. Die aufgrund des Staudrucks in eine hinter dem Frischlufteinlass angeordnete Luftleitung einfließende Luft wird bevorzugt zusätzlich durch einen Kompressor weiter komprimiert, um die Luftdruck auf den Wert zu bringen, der für das Druckbeaufschlagen der Kabine erforderlich ist, und in ein nachfolgendes Leitungsnetz eingespeist, von wo es aus in die entsprechenden Luftaufbereitungssysteme gelangen kann. Um am Bodenbetrieb vorgegebene Anforderungen an die Akustik zu erfüllen - insbesondere soll eine bestimmte Luftgeschwindigkeit nicht überschritten werden - und den Druckverlust zum Einsparen von Energie zu minimieren, kann es erforderlich sein, eine oder mehrere Nebenlufteinlässe vorzusehen, die zusätzliche Einströmquerschnitte am Boden bereitstellen, um dadurch den Strömungswiderstand zu reduzieren und die mittlere Strömungsgeschwindigkeit zu senken. Für den Betrieb dieser Nebenlufteinlässe sind allerdings mechanisch aktuierte Klappen bzw. Verschlüsse notwendig, die die Nebenlufteinlässe während des Flugs wieder verschließen.

Weiterhin ist bei der Verwendung von vorangehend geschilderten Frischlufteinlässen nachteilig, dass diese bei bodennahen Operationsphasen vor herumwirbelnden Staub und Kleingegenständen geschützt werden müssen, was üblicherweise durch ein Abweiseschild realisiert wird. Dieses Abweiseschild ist beispielsweise schwenkbar in Strömungsrichtung vor dem Frischlufteinlass angeordnet und in der Lage, die kinetische Energie der Fremdkörper aufzunehmen. Diese weitere mechanische Vorrichtung erhöht die Komplexität eines derartigen Frischlufteinlasssystems.

US 2004/144097 A1 zeigt eine Vorrichtung und ein Verfahren zum Schutz von Triebwerkslufteinlässen vor Beschädigungen durch herumfliegende Objekte, wobei die Vorrichtung eine Klappe 12 aufweist, die in eine erste und in eine zweite Position bewegbar ist. In einer ersten Position ist ein erster Lufteinlass geöffnet und ein zweiter Lufteinlass geschlossen, so dass die Gefahr verringert werden kann, dass herumfliegende Objekte in das Triebwerk geraten.

US 3 568 694 zeigt eine Triebwerksanordnung, bei der hochfrequenter Einlasslärm durch einen entsprechend schallisolierten Lufteinlass schallgedämmt wird, wobei der Lufteinlass verschiedene schwenkbar gelagerte Lufteinlassklappen aufweist.

EP 1 916 185 A2 zeigt einen Tandem-Luft-Einlass, bei dem zwei verschiedene Lufteinlässe vorgesehen sind, die zum Leiten von Frischluft an unterschiedliche Systeme verwendet werden, zwischen denen sich eine bewegbar angeordnete Klappe befindet, die besonders dazu befähigt ist, einen Staulufteinlass vor Beschädigung durch auftreffende Objekte zu schützen.

In GB 2 176 570 A wird eine Anordnung von Wirbelgeneratoren und/oder Grenzschichtabweisem zur Verminderung des Druckwiderstands und Verbesserung der Einlaufleistung in Lufteinläufen gezeigt, wobei beispielsweise eine Klappe über eine Achse verschwenkbar angeordnet und mit einem Aktuator gekoppelt werden, um einen Lufteinlauf wahlweise zu öffnen oder zu verschließen.

In GB 785721 A werden Lufteinlassanordnungen für Flugzeugtriebwerke gezeigt, bei denen exemplarisch eine bewegbare Klappe im Bereich eines Lufteinlasses angeordnet sein kann, die das Eintreten von Wasser oder Eis in das Triebwerk verhindert.

Die Aufgabe der Erfindung ist, einen Frischlufteinlass für ein Flugzeug vorzuschlagen, der mit möglichst geringer Komplexität, geringem Gewicht und möglichst wenig bewegten Teilen sowohl im Flug als auch im Bodenbetrieb für eine ausreichende Frischluftzufuhr für eine im Wesentlichen zapfluftlose Klimaanlage eines Flugzeugs bei möglichst geringer Leistungsanforderung an einen nachgeschalteten Kompressor bereitstellen kann.

Die Aufgabe wird gelöst durch einen Frischlufteinlass für ein Flugzeug, aufweisend mindestens einen Staulufteinlass mit mindestens einer Staulufteinlassöffnung, mindestens eine von dem Staulufteinlass beabstandet angeordnete Nebenlufteinlassöffnung und mindestens eine bewegbar gelagerte Klappe, wobei sich die Klappe in eine erste Position und in eine zweite Position bewegen lässt, wobei die Klappe in der ersten Position im Wesentlichen die Nebenlufteinlassöffnung verdeckt und in der zweiten Position die Nebenlufteinlassöffnung zumindest teilweise öffnet und sich zumindest bereichsweise in die zur Staulufteinlassöffnung gerichteten Luftströmung zum Abschirmen der Staulufteinlassöffnung gegen Fremdkörper erstreckt.

Durch den erfindungsgemäßen Frischlufteinlass wird ein für den Staulufteinlass notwendiges Abweisschild durch die Klappe realisiert, die gleichzeitig zum Abdecken einer zusätzlichen Nebenlufteinlassöffnung dient. Die erste von der Klappe eingenommene Position ist dabei in solchen Flugzuständen einzunehmen, bei denen eine relativ hohe Fluggeschwindigkeit erreicht wird und bei denen sich das Flugzeug deutlich oberhalb des Bodens befindet. Die Nebenlufteinlassöffnung könnte beispielsweise als eine Öffnung realisiert werden, die sich direkt in einer äußeren Oberfläche des Flugzeugs befindet. Insbesondere kommt hier ein Bereich der Unterseite eines Flugzeugrumpfes in Betracht, möglich wäre dort etwa eine Öffnung in der Verkleidung des Flügel-Rumpf-Übergangs ("Belly Fairing"). Zum Verdecken der Nebenlufteinlassöffnung schmiegt sich die Klappe an die Kanten der Nebenlufteinlassöffnung an, so dass bei geschlossener Nebenlufteinlassöffnung eine möglichst glatte geschlossene Oberfläche entsteht. Der Staulufteinlass wird in diesem Fall nicht durch die Klappe beeinträchtigt, so dass die vollständige Fläche der Staulufteinlassöffnung zum Aufnehmen von Stauluft zur Verfügung steht.

In der zweiten von der Klappe einnehmbaren Position ist die Nebenlufteinlassöffnung nicht durch die Klappe verdeckt, so dass die Nebenlufteinlassöffnung vollständig zum Aufnehmen von Luft aus der Umgebung zur Verfügung steht. Hält sich das Flugzeug demnach bei in Betrieb befindlichem Klimatisierungssystem am Boden auf, kann sowohl durch die Nebenlufteinlassöffnung als auch durch den Staulufteinlass Luft aus der Umgebung angesaugt und durch das Klimatisierungssystem verwendet werden. Dabei ist zu beachten, dass die Klappe in einem hinreichenden Abstand zum Staulufteinlass positioniert sein sollte, so dass im Bodenbetrieb keine oder lediglich minimale strömungsmechanische Beeinflussungen zwischen der Nebenlufteinlassöffnung und dem Staulufteinlass entstehen. Bei geringen Geschwindigkeiten, wie etwa beim Start oder bei der Landung des Flugzeugs, steht aufgrund der erfindungsgemäßen Kombination aus Nebenlufteinlassklappe und Abweisschild für den Staulufteinlass ebenfalls eine deutlich vergrößerte Einlassöffnung für Umgebungsluft zur Verfügung.

Der erfindungsgemäße Lufteinlass Frischlufteinlass weist eine Reihe von Vorteilen gegenüber vorbekannten Frischlufteinlässen aus dem Stand der Technik dar. Zum einen kann der Druckverlust des Frischlufteinlasses durch die erhöhte Querschnittsfläche am Boden oder in Flugphasen mit relativ geringer Geschwindigkeit reduziert werden. Dies resultiert in einem deutlich geringeren Energieaufwand für etwaige nachgeschaltete Kompressoren oder Gebläse. Zudem werden strömungsinduzierte Geräusche aufgrund der günstigeren Strömungseigenschaften in ihrer Stärke reduziert. Weiterhin ist es besonders bevorzugt möglich, den Staulufteinlass im Wesentlichen ausschließlich für die Verwendung im eigentlichen Reiseflug auszulegen. Es müssen demnach keine Kompromisse geschaffen werden, die zur Begünstigung des Bodenbetriebs die Strömungseigenschaften für den Reiseflug verschlechtern würden.

Bei einer vorteilhaften Ausführungsform des erfindungsgemäßen Frischlufteinlasses befindet sich die Nebenlufteinlassöffnung stromaufwärts von dem Staulufteinlass. Dadurch wird die Verwendung der Klappe als Abdeckung für die Nebenlufteinlassöffnung und gleichzeitig für die Verwendung als Abweisschild für den Staulufteinlass begünstigt. Dies resultiert aus der Tatsache, dass bei stromaufwärts gelegener Nebenlufteinlassöffnung diese zuerst von der umgebenden Luftströmung passiert wird, so dass eine in der Nähe der Nebenlufteinlassöffnung angeordnete Klappe zum Verschließen der Nebenlufteinlassöffnung leicht in die Luftströmung ausgelenkt werden kann, die direkt auf den Staulufteinlass gerichtet ist.

Bei einer vorteilhaften Weiterbildung der Erfindung ist die Klappe in ihrer zweiten Position im Wesentlichen stromaufwärts von dem Staulufteinlass und der Nebenlufteinlassöffnung positioniert. Dies bedeutet, dass die am Boden zur Verfügung stehende gesamte Lufteinlassfläche zwischen der Klappe und dem Staulufteinlass zur Verfügung gestellt wird und bei geringeren Geschwindigkeiten der Staudruckeinfluss auf die Nebenlufteinlassöffnung minimiert wird. Gleichermaßen kann dadurch ein relativ hoher Abstand zwischen der Klappe und der Staulufteinlassöffnung realisiert werden, so dass geringere strömungsmechanische Interferenzeffekte am Staulufteinlass verursacht werden.

Bei einer weiteren vorteilhaften Weiterbildung des erfindungsgemäßen Lufteinlasses befindet sich die Klappe in ihrer zweiten Position im Wesentlichen zwischen dem Staulufteinlass und der Nebenlufteinlassöffnung. Dadurch können strömungsmechanische Interferenzen zwischen der in die Nebenlufteinlassöffnung eintretenden Luft und der in die Staulufteinlassöffnung strömenden Luft verringert werden. Dabei ist es besonders günstig, die Klappe an die Form des Staulufteinlasses anzupassen, denn dies könnte einen geringeren Abstand der Klappe zum Staulufteinlass bei reduzierter Strömungsbeeinflussung begünstigen, so dass die Nebenlufteinlassöffnung zum Reduzieren von Strömungswiderständen nachfolgender Luftleitungen ebenfalls relativ dicht vor dem Staulufteinlass positioniert werden könnte. Ein weiterer durch diese Anordnung begünstigter Effekt wird weiter nachfolgend anhand einer weiteren vorteilhaften Weiterbildung beschrieben.

Eine bevorzugte Ausführungsform des erfindungsgemäßen Frischlufteinlasses weist ferner einen mit der Nebenlufteinlassöffnung verbundenen Nebenlufteinlasskanal auf, ebenso einen mit der Staulufteinlassöffnung verbundenen Staulufteinlasskanal und einen Frischluftkanal, wobei sich der Nebenlufteinlasskanal und der Staulufteinlasskanal mit dem Frischluftkanal verbinden lassen. Dadurch wird eine Zusammenfassung der Strömungen in die Nebenlufteinlassöffnung und den Staulufteinlass ermöglicht, so dass die gesamte der Umgebung entnommene Luft in einem gemeinsamen Frischluftkanal zur Verfügung steht und etwa durch ein Klimatisierungssystem des Flugzeugs entnommen werden kann.

Es ist ferner bevorzugt, dass sich die Klappe in eine dritte Position bewegen lässt, bei der sich die Klappe zum Leiten von Stauluft in die Nebenlufteinlassöffnung von einer Oberfläche des Flugzeugs zumindest teilweise in die Luftströmung erstreckt und gleichzeitig die zur Staulufteinlassöffnung gerichtete Luftströmung im Wesentlichen nicht behindert. Durch diese Konstellation, die besonders durch eine zwischen der Nebenlufteinlassöffnung und dem Staulufteinlass angeordnete Klappe begünstigt wird, kann in bestimmten Flugphasen ein zusätzlicher Massenstrom erzeugt werden, der sich im Flug durch den Staudruck in die Nebenlufteinlassöffnung leiten lässt. Bei diesem Betriebsmodus des erfindungsgemäßen Lufteinlasses ist die Klappe gerade so weit geöffnet, dass sie die zur Staulufteinlassöffnung gerichtete Luftströmung gerade nicht behindert, jedoch bereits so weit in die Luftströmung hineinragt, dass ein deutlich bemerkbarer Staudruck induzierter Massenstrom in die Nebenlufteinlassöffnung gelangt. Dieser Betriebsmodus wird weiter nachfolgend als "Boost Modus" bezeichnet.

Es ist ferner günstig, wenn der erfindungsgemäße Frischlufteinlass ein im Nebenlufteinlasskanal angeordnetes Rückschlagventil aufweist. Dadurch kann verhindert werden, dass insbesondere bei geschlossener Nebenlufteinlassöffnung durch den relativ hohen Staudruck am Staulufteinlass ein Zurückschlagen der durch den Staulufteinlass eingenommenen Luftströmung aus der Nebenlufteinlassöffnung in die Umgebung des Flugzeugs erfolgt. Da an der Nebenlufteinlassöffnung lediglich der statische Umgebungsdruck anliegt, an der Staulufteinlassöffnung jedoch der dynamische Staudruck, würde sich eine prägnante Druckdifferenz zwischen den beiden Öffnungen ausbilden, die ohne Rückschlagventil nur durch eine sehr starke Sogwirkung im Frischluftkanal kompensiert werden könnte.

Weiterhin ist es bevorzugt, dass die Querschnittsfläche des Frischluftkanals zumindest gleich der Summe der Querschnittsflächen des Nebenlufteinlasskanals und des Staulufteinlasskanals ist. Dadurch wird verhindert, dass der in den Frischluftkanal mündende Massenstrom einen erhöhten Strömungswiderstand erfahren würde, am Eingang des Frischluftkanals Druckspitzen oder Schwingungseffekte auftreten würden.

In einer besonders bevorzugten Ausführungsform des erfindungsgemäßen Lufteinlasses ist ein Notbelüftungskanal vorgesehen, der sich mit dem Nebenlufteinlasskanal verbinden lässt. Dadurch kann ein Notbelüftungssystem erzeugt oder unterstützt werden, welches auf Basis von eingenommener Stauluft eine Notbelüftung einer Kabine ermöglicht. Dies führt zu einer zusätzlichen Reduzierung des Gewichts. Die Kombination aus Nebenlufteinlassöffnung, Staulufteinlass und Notstaulufteinlass ist insbesondere dann vorteilhaft, wenn sich die Klappe in ihrer dritten Position befindet und durch die Nebenlufteinlassöffnung auch zusätzliche Stauluft aus der Umgebung zur Verfügung steht.

Ferner ist es besonders günstig, wenn sich in dem Notbelüftungskanal eine bewegbar gelagerte Notbelüftungseinlassklappe befindet, die bei normalem Betrieb des Flugzeugs die Notbelüftung durch die Nebenlufteinlassöffnung und den Staulufteinlass deaktiviert, jedoch bei Bedarf durch Öffnen der Notbelüftungseinlassklappe wieder aktiviert werden kann.

Außerdem ist es bevorzugt, dass der erfindungsgemäße Lufteinlass ferner einen Aktuator zum Bewegen der Notbelüftungseinlassklappe zum Öffnen oder Schließen der Verbindung zwischen dem Notbelüftungskanal und dem Nebenlufteinlasskanal aufweist. Dadurch könnte per Knopfdruck oder automatisch durch eine geeignete Steuer- bzw. Regeleinheit ein automatisches Öffnen der Notbelüftungseinlassklappe realisiert werden.

In einer vorteilhaften Ausführungsform des erfindungsgemäßen Frischlufteinlasses befindet sich im Frischluftkanal ein Kompressor zum Fördern von Luft. Primär aufgrund des Differenzdrucks zwischen der Umgebung des Flugzeugs und der Kabine von etwa 0,5bar oder mehr während des Reiseflugs sowie den zusätzlichen Strömungswiderstand aufweisenden Leitungen und Luftaufbereitungssystemen wird der Kompressor zum Verdichten der Frischluft benötigt. Aufgrund der zur Verfügung stehenden gesamten Einlassöffnungsfläche der Nebenlufteinlassöffnung und der Staulufteinlassöffnung kann der Kompressor mit einer im Vergleich zum Stand der Technik relativ niedrigen Leistung betrieben werden, denn der Strömungswiderstand wird durch die relativ große Einlassöffnungsfläche deutlich verringert.

Weiterhin ist es vorteilhaft, wenn die Klappe an einem Scharnier verschwenkbar gelagert wird. Dies ist mechanisch besonders einfach und lässt sich durch zahlreiche kommerziell verfügbare, ausgereifte und wartungsarme Komponenten realisieren.

Außerdem ist es besonders vorteilhaft, wenn der erfindungsgemäße Frischlufteinlass einen Aktuator zum Bewegen der Klappe aufweist, der als elektrischer, hydraulischer oder pneumatischer Aktuator ausgeführt sein könnte. Dieser Aktuator könnte in unmittelbarer Nähe der Klappe positioniert werden und reduziert den mechanischen Aufwand an Betätigungselementen.

Schließlich ist es günstig, wenn der Frischluftkanal, der Staulufteinlasskanal und/oder der Nebenlufteinlasskanal zum Aufnehmen mindestens eines Wärmetauschers eingerichtet ist. Dadurch kann zusätzlicher Bauraum und Aufwand zum Integrieren eines Wärmetauschers von dem Klimatisierungssystem oder anderen Systemen eingespart werden. Diese Maßnahme bietet sich vor allem für relativ kleine Systeme an, die nicht die Hauptfunktion des Frischlufteinlasses beeinträchtigen und denen der in dem jeweiligen Kanal bereitgestellte Luftstrom ausreicht.

Schließlich wird die Aufgabe durch eine Verwendung eines Frischlufteinlasses nach den vorangehend geschilderten Merkmalen in einem Flugzeug gelöst. Weiterhin wird die Aufgabe durch ein Flugzeug mit mindestens einem vorangehend geschilderten erfindungsgemäßen Frischlufteinlass gelöst.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und der Figuren. Dabei bilden alle beschriebenen und/oder bildlich dargestellten Merkmale für sich und in beliebiger Kombination den Gegenstand der Erfindung auch unabhängig von ihrer Zusammensetzung in einzelnen Ansprüchen oder deren Rückbeziehung. In den Figuren stehen weiterhin gleiche Bezugszeichen für gleiche oder ähnliche Objekte. Es zeigen:
Fig. 1: schematische Ansicht eines Frischlufteinlasses im Stand der Technik mit ausgeklapptem Abweiseschild;
Fig. 2: eine schematische Ansicht eines Frischlufteinlasses im Stand der Technik mit eingeklapptem Abweiseschild;
Fig. 3: ein erstes Ausführungsbeispiel des erfindungsgemäßen Frischlufteinlasses mit ausgeschwenkter Klappe;
Fig. 4: ein zweites Ausführungsbeispiel des erfindungsgemäßen Frischlufteinlasses mit ausgeschwenkter Klappe;
Fig. 5: zweites Ausführungsbeispiel des erfindungsgemäßen Frischlufteinlasses mit eingeschwenkter Klappe;
Fig. 6: zweites Ausführungsbeispiel mit Klappe im Boost-Modus;
Fig. 7: schematische Ansicht der effektiven Staufläche des zweiten Ausführungsbeispiels im Boost-Modus;
Fig. 8: Diagramm zur Senkung des Kompressor-Leistungsbedarfs im Boost-Modus;
Fig. 9: ein drittes Ausführungsbeispiel des erfindungsgemäßen Frischlufteinlasses;
Fig. 10: eine weitere schematische Ansicht des dritten Ausführungsbeispiels mit geschlossener Notbelüftungseinlassklappe; und
Fig. 11a bis c: Übersicht über verschiedene realisierbare Staulufteinlassformen.

### DETAILLIERTE BESCHREIBUNG BEVORZUGTER AUSFÜHRUNGSBEISPIELE

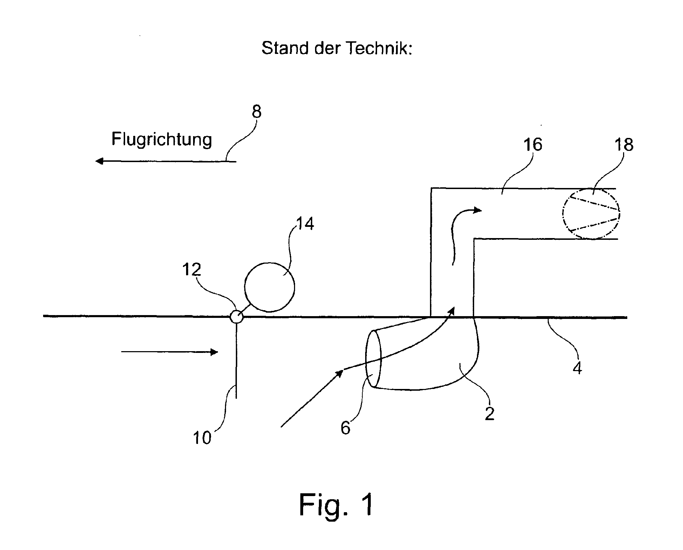

Fig. 1 stellt einen Frischlufteinlass 2 aus dem Stand der Technik dar, der sich exemplarisch an der Unterseite eines Flugzeugrumpfs 4 befindet. Der Frischlufteinlass 2 weist eine Staulufteinlassöffnung 6 auf, die in Flugrichtung 8 weist. Stromaufwärts von der Staulufteinlassöffnung 6 ist ein Abweiseschild 10 angeordnet, das um ein Scharnier 12 an dem Flugzeugrumpf 4 verschwenkbar gelagert ist. Ein Aktuator 14 ist zum Auslenken mit dem Abweiseschild 10 verbunden. In der gezeigten Darstellung ist das Abweiseschild 10 ausgelenkt und erstreckt sich von der Oberfläche des Flugzeugrumpfs 4 nach außen. Gegenstände, die sich entgegen der Flugrichtung 8 auf den Staulufteinlass 2 zubewegen, werden vom Abweiseschild 10 aufgehalten. Diese Gegenstände könnten beispielsweise Fremdkörper in Form von Schmutzpartikeln, Staub oder dergleichen sein. Zum Leiten von Stauluft, die durch die Staulufteinlassöffnung 6 in den Staulufteinlass 2 gelangt, ist ein Stauluftkanal 16 an den Frischlufteinlass 2 angebunden. Innerhalb dieses Stauluftkanals 16 befindet sich ein Kompressor 18, der dazu dient, im Bodenbetrieb Luft aus der Umgebung einzusaugen bzw. im Flugbetrieb die aufgenommene Stauluft zu verdichten und an ein Klimatisierungssystem oder dergleichen weiterzuleiten.

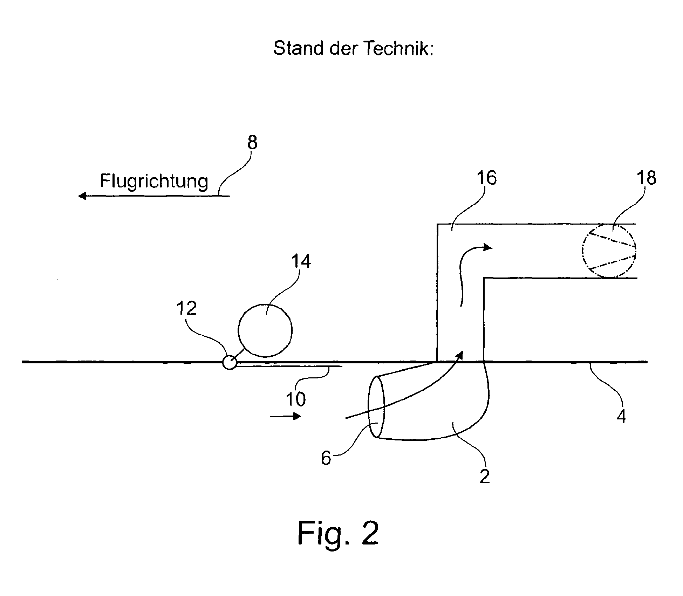

In Fig. 2 ist die Anordnung aus Fig. 1 erneut dargestellt, jedoch ist in Fig. 2 das Abweiseschild 10 eingeklappt. Dadurch ist die Staulufteinlassöffnung 6 ohne Behinderung durch das Abweiseschild 10 in der Lage, Stauluft aus der Umgebung aufzunehmen. Dies ist im Reiseflug der Fall, wenn nicht mit herumfliegenden Gegenständen gerechnet werden muss und eine Beschädigung des Staulufteinlasses 2 im Wesentlichen per se ausgeschlossen werden kann.

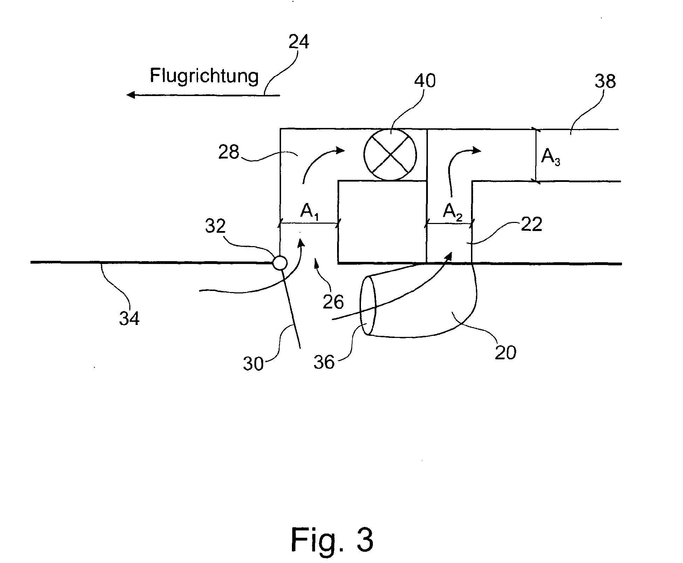

Fig. 3 zeigt ein erstes Ausführungsbeispiel des erfindungsgemäßen Frischlufteinlasses. Es wird ein Staulufteinlass 20 gezeigt, der mit einem Staulufteinlasskanal 22 verbunden ist. In Flugrichtung 24, das heißt stromaufwärts gelegen, befindet sich eine Nebenlufteinlassöffnung 26, die mit einem Nebenlufteinlasskanal 28 verbunden ist. Stromaufwärts von der Nebenlufteinlassöffnung 26 gelegen ist eine Klappe 30 angeordnet, die mittels eines Scharniers 32 verschwenkbar an einer äußeren Oberfläche 34 des Flugzeugs gelagert ist. In dem dargestellten Falle erstreckt sich die Klappe 30 von der äußeren Oberfläche 34 des Flugzeugs nach außen und befindet sich damit in der zu einer Staulufteinlassöffnung 36 gerichteten Luftströmung. Der Nebenlufteinlasskanal 28 und der Staulufteinlasskanal 22 sind mit einem Frischluftkanal 38 verbunden, wobei die Querschnittsfläche (A3) des Frischluftkanals 38 mindestens der Summe der Flächen des Nebenlufteinlasskanals 28 (A1) und des Stauluftkanals 22 (A2) entspricht. Dadurch ist eine möglichst optimale Kontinuität der Strömung aus den zwei dargestellten unterschiedlichen Quellen realisiert.

Die gezeigte Konstellation der ausgelenkten Klappe 30, der geöffneten Nebenlufteinlassöffnung 26 und der stromabwärts auf die Klappe 30 folgende Staulufteinlass 20 betrifft insbesondere die Situation am Boden oder bei Start und Landung des betreffenden Flugzeugs. Die Klappe 30 fungiert hier als Abweiseschild, wie bezüglich der Fign. 1 und 2 anhand des Standes der Technik erläutert. Da am Boden oder in bodennahen Zuständen mit geringen Fluggeschwindigkeiten kein oder nur ein geringer Staudruck auf der Staulufteinlassöffnung 36 lastet, kann durch die ausgelenkte Klappe 30 die zur Verfügung stehende Eintrittsöffnungsfläche für Frischluft von außen deutlich vergrößert werden. Dadurch sinkt der Strömungswiderstand an der Eintrittsstelle der Luft in das Flugzeug, so dass die Leistungsanforderung an einen hier nicht dargestellten Kompressor gesenkt werden kann.

Ein in Fig. 3 ferner dargestelltes Rückschlagventil 40 dient dazu, ein Rückströmen von Stauluft, die in die Staulufteinlassöffnung 36 eintritt, über den Nebenlufteinlasskanal 28 und durch die Nebenlufteinlassöffnung 26 wieder hinaus in die Umgebung zu verhindern. Diese Rückströmung könnte dann erfolgen, wenn sich das Flugzeug bewegt und ein merkbarer Staudruck auf der Staulufteinlassöffnung 36 lastet, wodurch der Gesamtdruck an der Staulufteinlassöffnung 36 den statischen Umgebungsdruck an der Nebenlufteinlassöffnung 26 übersteigt.

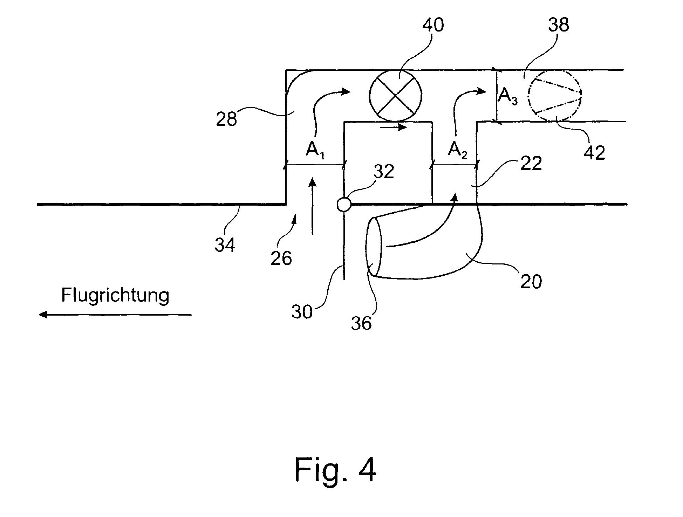

In Fig. 4 wird ein zweites Ausführungsbeispiel dargestellt, bei dem sich die Klappe 30 und das Scharnier 32 zwischen der Nebenlufteinlassöffnung 26 und der Staulufteinlassöffnung 36 befindet. Dargestellt ist auch hier eine Konstellation, die für den Bodenaufenthalt oder zum Starten oder Landen Verwendung findet. Die Klappe 30 dient als Abweiseschild für den Staulufteinlass 20 und verhindert das Eintreten von herumwirbelnden Gegenständen, die zur Zerstörung des Staulufteinlasses 20 führen könnten.

Ferner ist in Fig. 4 ein Gebläse bzw. Kompressor 42 dargestellt, der die Luft aus den beiden Öffnungen 26 und 36 über den Frischluftkanal 38 zu einem Klimatisierungssystem oder anderen Verbrauchern leitet.

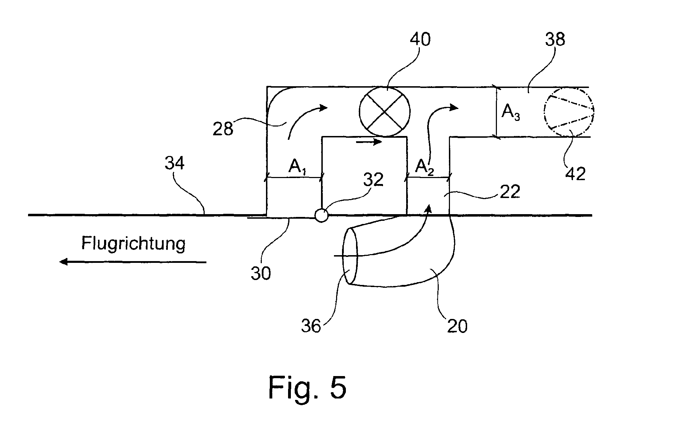

Fig. 5 zeigt das zweite Ausführungsbeispiel mit geschlossener Klappe 30, wie für einen normalen Reiseflugzustand verwendet. Die äußere Oberfläche 34 ist im Bereich der Nebenlufteinlassöffnung 26 möglichst glatt, so dass in diesem Bereich keine zusätzlichen Strömungswiderstände erzeugt werden und der Staulufteinlass 20 ungehindert Stauluft aus der Umgebung aufnehmen kann.

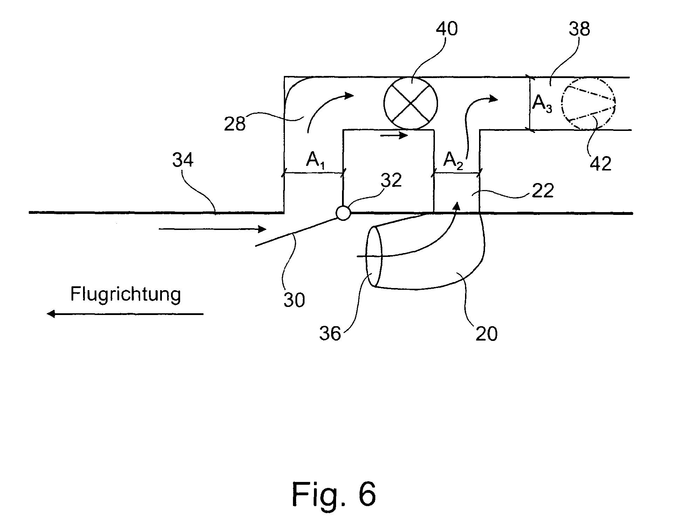

Eine zusätzliche Betriebsvariante des zweiten Ausführungsbeispiels ist in Fig. 6 gezeigt. Dort befindet sich die Klappe 30 in einer dritten Position, die zwischen einer vollständig geschlossenen Position (der "ersten Position") und einer vollständig ausgelenkten Position (der "zweiten Position") befindet. Die Klappe 30 ist hier gerade so weit ausgelenkt, dass der Staulufteinlass 20 weitestgehend bzw. im Wesentlichen ungehindert Stauluft aus der Umgebung aufnehmen kann, dennoch aber eine Erstreckung der Klappe 30 in die Luftströmung erfolgt, was in einer zusätzlichen Stauluftwirkung auf die Nebenlufteinlassöffnung 26 führt. Die effektive Staufläche des erfindungsgemäßen Lufteinlasses liegt demnach insgesamt also höher als lediglich die einfache Fläche der Staulufteinlassöffnung 36.

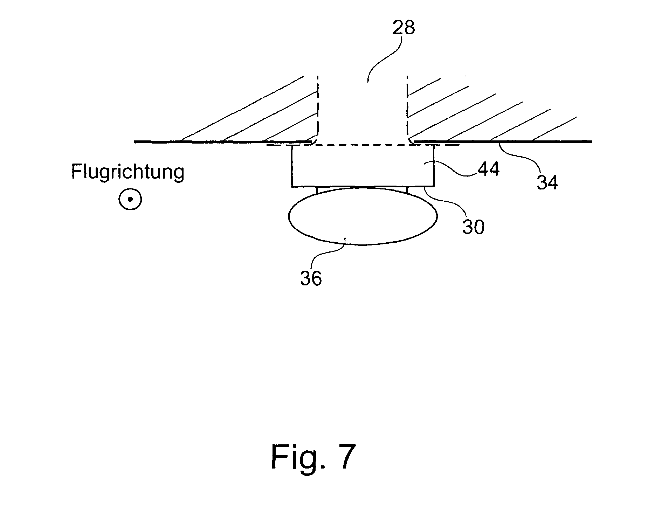

Die Erhöhung der effektiven Staufläche wird zur Verdeutlichung in Fig. 7 schematisch dargestellt. In einer Schnittansicht senkrecht zu einer Flugzeuglängsachse wird klar, dass die ursprüngliche Stauluftfläche, welche durch die Staulufteinlassöffnung 36 gebildet ist, durch eine in der dritten Position befindlichen Klappe 30 zusätzlich gesteigert werden kann. Die von der äußeren Oberfläche 34 des Flugzeugs abgewandte Kante der Klappe 30 befindet sich in der Draufsicht auf den Staulufteinlass 20 an der oberen Kante der Staulufteinlassöffnung 36 und bildet eine weitere Staufläche 44, die sich bis zur äußeren Oberfläche 34 des Flugzeugs erstreckt. Dadurch kann der Staudruck vor dem Kompressor 42 erhöht werden, was eine Auslegung der Kompressoren für einen im Vergleich zu im Stand der Technik bekannten Varianten geringeren Bereich von Druckverhältnissen erlaubt. Gerade bei maximalem Differenzdruck zwischen der Passagierkabine und der Umgebung während des Reiseflugs stößt ein Kabinenkompressor häufig an seine Leistungsgrenzen. Der erfindungsgemäße Frischlufteinlass kann durch Verwendung dieses sogenannten "Boost-Modus" die benötigten Leistungs- und Druckspitzen abmindern. Dies gilt insbesondere für einstufige Kompressoren mit fester Schaufelgeometrie, die aufgrund ihrer Einfachheit und Robustheit bevorzugt im Flugzeug eingesetzt werden.

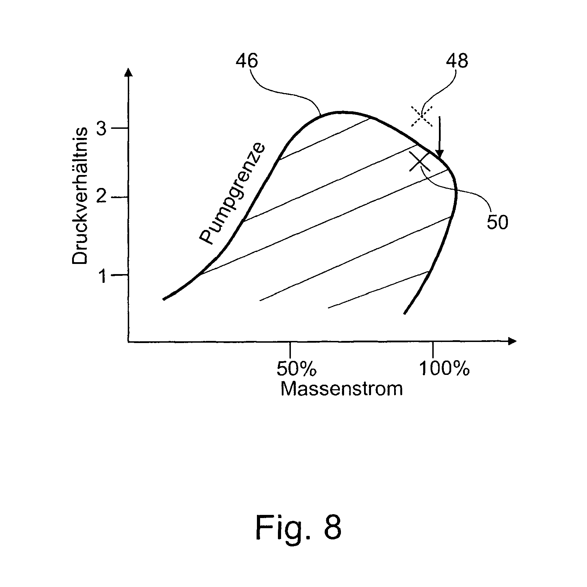

Durch den zusätzlichen Staudruck aufgrund der erhöhten Staufläche aufgrund der teilweise geöffneten Klappe 30 wird ein zulässiges Druckverhältnis des Kabinenkompressors erreicht. Dies wird ferner in Fig. 8 anhand eines Diagramms dargestellt, das den Massenstrom über dem Druckverhältnis des Kompressors zeigt. Eine Pumpgrenze 46 gibt die Leistungsgrenzen eines Kompressors vor und hängt ab von dessen mechanischer Auslegung. Beispielhaft sei hier dargestellt, dass das Erhöhen der effektiven Staufläche durch die Klappe 30 zu einem Senken des Druckverhältnisses von Betriebspunkt 48 zu einem neuen Betriebspunkt 50 erlaubt, der innerhalb des realisierbaren Bereichs unterhalb der Pumpgrenze 46 des verwendeten Kompressors liegt.

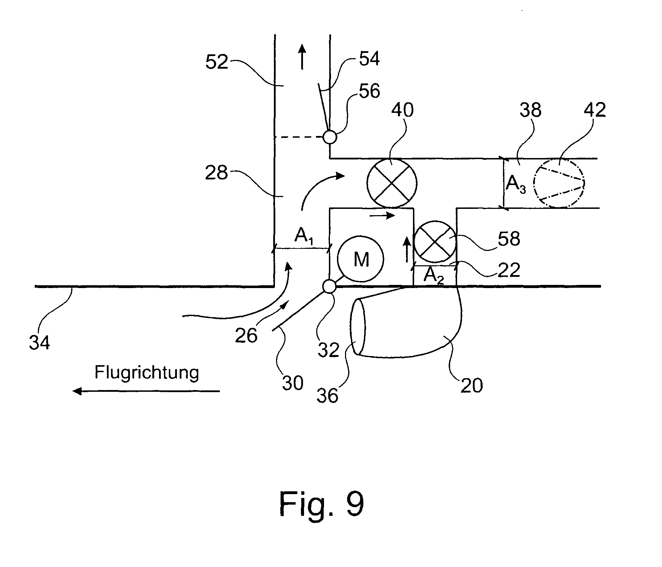

Fig. 9 zeigt ein drittes Ausführungsbeispiel des erfindungsgemäßen Lufteinlasses. Hier wird ein zusätzlicher Notbelüftungskanal 52 integriert, der mit dem Nebenlufteinlasskanal 28 verbunden ist. Zwischen dem Notbelüftungskanal 52 und dem Nebenlufteinlasskanal 28 befindet sich eine Notbelüftungseinlassklappe 54, die an einem Scharnier 56 bewegbar innerhalb des Notbelüftungskanals 52 gelagert ist. Durch diese dargestellte Anordnung kann zusätzlich Luft durch die Nebenlufteinlassöffnung 26 in den Notbelüftungskanal 52 gelangen, insbesondere dann, wenn sich die Klappe 30 im "Boost-Modus" befindet. Besonders hervorzuheben an dieser Anordnung ist, dass ein zusätzliches Rückschlagventil 58 innerhalb des Staulufteinlasskanals 22 angeordnet ist. Dadurch wird ein Rückschlagen von durch die Nebenlufteinlassöffnung 26 aufgenommener Stauluft über die Staulufteinlassöffnung 36 verhindert.

Die Notbelüftungseinlassklappe 54 innerhalb des Notbelüftungskanals 52 kann als Drei-Wege-Ventil ausgeführt werden, so dass insgesamt drei verschiedene Betriebsmodi zur Verfügung stehen. Zum einen kann sich die Notbelüftungseinlassklappe 54 in ihrer in Fig. 9 dargestellten Position befinden, so dass Stauluft durch die Nebenlufteinlassöffnung 26 in den Frischluftkanal 38 und in den Notbelüftungskanal 52 gelangt.

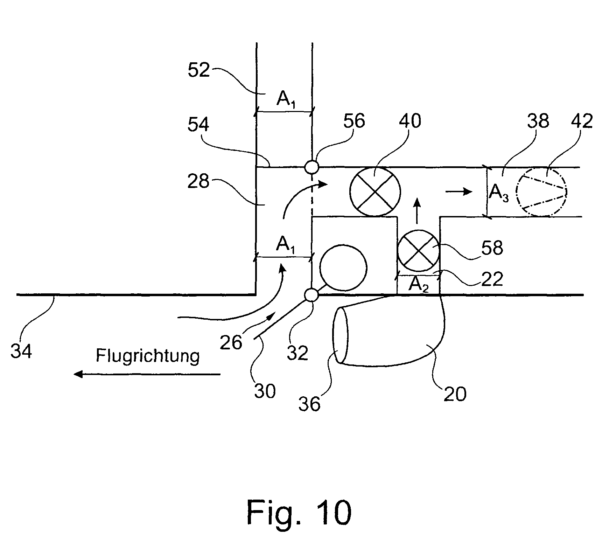

In Fig. 10 ist eine weitere Position der Notbelüftungseinlassklappe 54 des Notbelüftungskanals 52 dargestellt, bei der die in die Nebenlufteinlassöffnung 26 strömende Stauluft nicht in den Notbelüftungskanal 52 gelangen kann, sondern ausschließlich zum Frischluftkanal 38 geleitet wird. Ferner könnte es realisierbar sein, die Notbelüftungseinlassklappe 54 des Notbelüftungskanals 52 in eine weitere Position zu bringen, die die Verbindung der Nebenlufteinlassöffnung 26 mit dem Frischluftkanal 38 unterbindet, so dass Stauluft aus der Nebenlufteinlassöffnung 26 lediglich in den Notbelüftungskanal 52 gelangen kann.

Diese Anordnung aus den Fign. 9 und 10 hat den Vorteil, dass zusätzliche Rumpföffnungen bzw. Stauluftklappen für den Notbelüftungseinlass eingespart werden können. Dies reduziert das Gewicht, den Installationsraum und die direkten Kosten. Weiterhin können Kanal- bzw. Rohrstrecken eingespart werden, da sie für mehrere Funktionen, wie etwa Nebenluftzufuhr und Notbelüftung verwendet werden können.

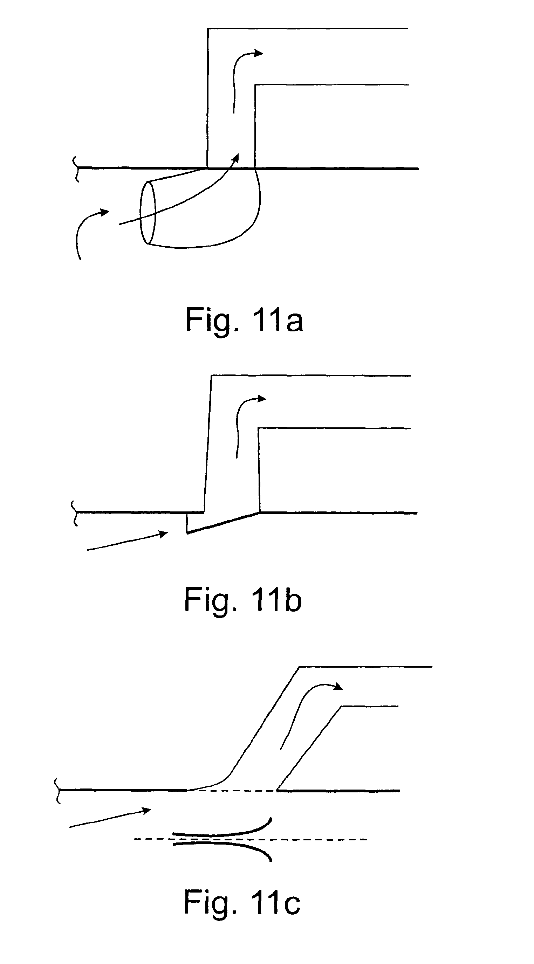

Abschließend wird auf den nachfolgenden Fign. 11a bis 11c mögliche Staulufteinlassformen gezeigt, die verdeutlichen sollen, dass die vorliegende Erfindung nicht auf den dargestellten gondelförmigen Staulufteinlass beschränkt ist. Vielmehr sind alle Arten von Staulufteinlässen denkbar, die es auf irgendeine Weise ermöglichen, Stauluft aufzunehmen und in eine Leitung bzw. einen Kanal zu leiten.

Ergänzend ist darauf hinzuweisen, dass "umfassend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: Frischlufteinlass
- 4: Flugzeugrumpf
- 6: Staulufteinlassöffnung
- 8: Flugrichtung
- 10: Abweiseschild
- 12: Scharnier
- 14: Aktuator
- 16: Stauluftkanal
- 18: Kompressor
- 20: Staulufteinlass
- 22: Staulufteinlasskanal
- 24: Flugrichtung
- 26: Nebenlufteinlassöffnung
- 28: Nebenlufteinlasskanal
- 30: Klappe
- 32: Scharnier
- 34: äußere Oberfläche des Flugzeugs
- 36: Staulufteinlassöffnung
- 38: Frischluftkanal
- 40: Rückschlagventil
- 42: Kompressor
- 44: Staufläche
- 46: Pumpgrenze
- 48: Betriebspunkt Kompressor
- 50: neuer Betriebspunkt Kompressor
- 52: Notbelüftungskanal
- 54: Notbelüftungseinlassklappe
- 56: Scharnier
- 58: Rückschlagventil

## Patentansprüche

1. Frischlufteinlass für ein Flugzeug, aufweisend
- mindestens einen Staulufteinlass (20) mit mindestens einer Staulufteinlassöffnung (36),
- mindestens eine von dem Staulufteinlass (20) beabstandet angeordnete Nebenlufteinlassöffnung (26),
- mindestens eine bewegbar gelagerte Klappe (30),
- einen mit der Nebenlufteinlassöffnung (26) verbundenen Nebenlufteinlasskanal (28),
- einen mit der Staulufteinlassöffnung (36) verbundenen Staulufteinlasskanal (22)
- einen Frischluftkanal (38) und
- ein im Nebenlufteinlasskanal (28) angeordnetes Rückschlagventil (40);
wobei sich die Klappe (30) in eine erste Position und in eine zweite Position bewegen lässt,
wobei die Klappe (30) in der ersten Position die Nebenlufteinlassöffnung (26) verdeckt und in der zweiten Position die Nebenlufteinlassöffnung (26) zumindest teilweise öffnet und sich zumindest bereichsweise in die zur Staulufteinlassöffnung (36) gerichtete Luftströmung zum Abschirmen der Staulufteinlassöffnung (36) gegen Fremdkörper erstreckt und
wobei der Nebenlufteinlasskanal (28) und der Staulufteinlasskanal (22) mit dem Frischluftkanal (38) verbunden sind.

2. Frischlufteinlass nach Anspruch 1, bei dem die Nebenlufteinlassöffnung (26) stromaufwärts von dem Staulufteinlass (20) positioniert ist.

3. Frischlufteinlass nach Anspruch 1 oder 2, bei dem die Klappe (30) in ihrer ersten Position stromaufwärts von dem Staulufteinlass (20) und der Nebenlufteinlassöffnung (26) positioniert ist.

4. Frischlufteinlass nach einem der Ansprüche 1 oder 2, bei dem die Klappe (30) in ihrer ersten Position zwischen dem Staulufteinlass (20) und der Nebenlufteinlassöffnung (26) positioniert ist.

5. Frischlufteinlass nach einem der vorhergehenden Ansprüche, wobei sich die Klappe (30) in eine dritte Position bewegen lässt, bei der sich die Klappe (30) zum Leiten von Stauluft in die Nebenlufteinlassöffnung (26) von einer Oberfläche (34) zumindest teilweise in die Luftströmung erstreckt und gleichzeitig die zur Staulufteinlassöffnung (36) gerichtete Luftströmung nicht behindert.

6. Frischlufteinlass nach einem der vorhergehenden Ansprüche, bei dem die Querschnittsfläche des Frischluftkanals (38) zumindest gleich der Summe der Querschnittsflächen des Nebenlufteinlasskanals (28) und des Staulufteinlasskanals (22) ist.

7. Frischlufteinlass nach einem der vorhergehenden Ansprüche, ferner aufweisend einen Notbelüftungskanal (52), der sich mit dem Nebenlufteinlasskanal (28) verbinden lässt.

8. Frischlufteinlass nach Anspruch 7, ferner aufweisend eine im Notbelüftungskanal (52) angeordnete bewegbar gelagerte Notbelüftungseinlassklappe (54).

9. Frischlufteinlass nach Anspruch 8, ferner aufweisend einen weiteren Aktuator zum Bewegen der Notbelüftungseinlassklappe (54) zum Öffnen oder Schließen der Verbindung zwischen dem Notbelüftungskanal (52) und dem Nebenlufteinlasskanal (28).

10. Frischlufteinlass nach einem der vorhergehenden Ansprüche, ferner aufweisend einen in dem Frischluftkanal (38) angeordneten Kompressor (42) zum Fördern von Luft.

11. Frischlufteinlass nach einem der vorhergehenden Ansprüche, wobei die Klappe (30) an einem Scharnier (32) verschwenkbar gelagert ist.

12. Frischlufteinlass nach einem der vorhergehenden Ansprüche, ferner aufweisend einen Aktuator zum Bewegen der Klappe (30).

13. Frischlufteinlass nach einem der vorhergehenden Ansprüche, wobei der Frischluftkanal (38), der Staulufteinlasskanal (22) und/oder der Nebenlufteinlasskanal (28) zum Aufnehmen mindestens eines Wärmetauschers eingerichtet ist.

14. Verwendung eines Frischlufteinlasses nach einem der Ansprüche 1-13 in einem Flugzeug.

15. Flugzeug mit mindestens einem Frischlufteinlass nach einem der Ansprüche 1-13.

## Claims

1. A fresh air inlet for an aircraft, comprising
- at least one ram air inlet (20) with at least one ram air inlet opening (36),
- at least one secondary air inlet opening (26) that is spaced apart from the ram air inlet (20),
- at least one movably mounted flap (30),
- a secondary air inlet duct (28) that is connected to the secondary air inlet opening (26),
- a ram air inlet duct (22) that is connected to the ram air inlet opening (36),
- a fresh air duct (38) and
- a check valve (40) that is arranged in the secondary air inlet duct (28),
wherein the flap (30) is movable into a first position and into a second position;
wherein the flap (30) covers the secondary air inlet opening (26) in the first position and at least partially opens the secondary air inlet opening (26) and at least in certain areas extends into the air flow directed toward the ram air inlet opening (36) for shielding the ram air inlet opening (36) from foreign matter in the second position and
wherein the secondary air inlet duct (28) and the ram air inlet duct (22) are connected to the fresh air duct (3 8).

2. The fresh air inlet of claim 1, wherein the secondary air inlet opening (26) is positioned upstream of the ram air inlet (20).

3. The fresh air inlet of claim 1 or 2, wherein the flap (30) is positioned upstream of the ram air inlet (20) and the secondary air inlet opening (26) in its first position.

4. The fresh air inlet of one of claims 1 or 2, wherein the flap (30) is positioned between the ram air inlet (20) and the secondary air inlet opening (26) in its first position.

5. The fresh air inlet of one of the preceding claims, wherein the flap (30) is movable into a third position, in which the flap (30) at least partially extends into the air flow for routing ram air into the secondary air inlet opening (26) from a surface (34) and at the same time does not impair the air flow that is directed toward the ram air inlet opening (36).

6. The fresh air inlet of one of the preceding claims, wherein the cross-sectional surface of the fresh air duct (38) is at least equal to the sum of the cross-sectional surfaces of the secondary air inlet duct (28) and the ram air inlet duct (22).

7. The fresh air inlet of one of the preceding claims, furthermore comprising an emergency ventilation duct (52) that is connectable to the secondary air inlet duct (28).

8. The fresh air inlet of claim 7, furthermore comprising an emergency ventilation inlet flap (54) that is movably mounted in the emergency ventilation duct (52).

9. The fresh air inlet of claim 8, furthermore comprising another actuator for moving the emergency ventilation inlet flap (54) for opening or closing the connection between the emergency ventilation duct (52) and the secondary air inlet duct (28).

10. The fresh air inlet of one of the preceding claims, furthermore comprising a compressor (42) for conveying air that is arranged in the fresh air duct (38).

11. The fresh air inlet of one of the preceding claims, wherein the flap (30) is movably mounted on a hinge (32).

12. The fresh air inlet of one of the preceding claims, furthermore comprising an actuator for moving the flap (30).

13. The fresh air inlet of one of the preceding claims, wherein the fresh air duct (38), the ram air inlet duct (22) and/or the secondary air inlet duct (28) is designed for accommodating at least one heat exchanger.

14. The use of a fresh air inlet of one of claims 1 - 13 in an aircraft.

15. An aircraft with at least one fresh air inlet of one of claims 1 - 13.

## Revendications

1. Admission d'air frais pour un avion, comprenant
- au moins une admission d'air dynamique (20) avec au moins une ouverture d'admission d'air dynamique (36),
- au moins une ouverture d'admission d'air additionnel (26) disposée à distance de l'admission d'air dynamique (20),
- au moins un clapet (30) mobile,
- une gaine d'admission d'air additionnel (28) reliée à l'ouverture d'admission d'air additionnel (26),
- une gaine d'admission d'air dynamique (22) reliée à l'ouverture d'admission d'air dynamique (36),
- une gaine d'air frais (38) et
- une soupape anti-retour (40) disposée dans la gaine d'admission d'air additionnel (28);
le clapet (30) pouvant se déplacer dans une première position et dans une deuxième position,
le clapet (30) recouvrant dans la première position l'ouverture d'admission d'air additionnel (26) et ouvrant, au moins en partie, dans la deuxième position l'ouverture d'admission d'air additionnel (26) et s'étendant, au moins par zones, dans l'écoulement d'air orienté en direction de l'ouverture d'admission d'air dynamique (36) pour protéger l'ouverture d'admission d'air dynamique (36) de corps étrangers et
la gaine d'admission d'air additionnel (28) et la gaine d'admission d'air dynamique (22) étant reliées à la gaine d'air frais (38).

2. Admission d'air frais selon la revendication 1, dans laquelle l'ouverture d'admission d'air additionnel (26) est positionnée en amont de l'admission d'air dynamique (20).

3. Admission d'air frais selon l'une des revendications 1 et 2, dans laquelle le clapet (30) est positionné dans sa première position en amont de l'admission d'air dynamique (20) et de l'ouverture d'admission d'air additionnel (26).

4. Admission d'air frais selon l'une des revendications 1 et 2, dans laquelle le clapet (30) est positionné dans sa première position entre l'admission d'air dynamique (20) et l'ouverture d'admission d'air additionnel (26).

5. Admission d'air frais selon l'une des revendications précédentes, le clapet (30) pouvant se déplacer dans une troisième position, dans laquelle le clapet (30) s'étend, au moins en partie, d'une surface (34) dans l'écoulement d'air pour diriger l'air dynamique dans l'ouverture d'admission d'air additionnel (26) et dans le même temps n'entrave pas l'écoulement d'air orienté en direction de l'ouverture d'admission d'air dynamique (36).

6. Admission d'air frais selon l'une des revendications précédentes, dans laquelle l'aire de section de la gaine d'air frais (38) est au moins égale à la somme des aires de sections de la gaine d'admission d'air additionnel (28) et de la gaine d'admission d'air dynamique (22).

7. Admission d'air frais selon l'une des revendications précédentes, comprenant en outre une gaine de ventilation de secours (52), qui peut être reliée à la gaine d'admission d'air additionnel (28).

8. Admission d'air frais selon la revendication 7, comprenant en outre un volet d'aération de secours (54) monté mobile dans la gaine de ventilation de secours (52).

9. Admission d'air frais selon la revendication 8, comprenant en outre un actuateur supplémentaire destiné au déplacement du volet d'aération de secours (54) pour l'ouverture ou la fermeture de la liaison entre la gaine de ventilation de secours (52) et la gaine d'admission d'air additionnel (28).

10. Admission d'air frais selon l'une des revendications précédentes, comprenant en outre un compresseur (42), disposé dans la gaine d'air frais (38), pour le refoulement d'air.

11. Admission d'air frais selon l'une des revendications précédentes, dans laquelle le clapet (30) est monté pivotant sur une charnière (32).

12. Admission d'air frais selon l'une des revendications précédentes, comprenant en outre un actuateur pour le déplacement du clapet (30).

13. Admission d'air frais selon l'une des revendications précédentes, dans laquelle la gaine d'air frais (38), la gaine d'admission d'air dynamique (22) et/ou la gaine d'admission d'air additionnel (28) sont conçues pour recevoir au moins un échangeur de chaleur.

14. Utilisation d'une admission d'air frais selon l'une des revendications 1 - 13 dans un avion.

15. Avion avec au moins une admission d'air frais selon l'une des revendications 1 - 13.
